# EUROPEAN PATENT SPECIFICATION

(11) **EP 1 712 462 B1**
(45) Date of publication and mention of the grant of the patent: **28.04.2010**
(21) Application number: 05703364.9
(22) Date of filing: 07.01.2005
(51) Int. Cl.: B62M 3/00, B62K 19/16

(54) **CRANK FOR BICYCLE AND METHOD OF PRODUCING THE SAME**
KURBEL FÜR FAHRRAD UND VERFAHREN ZU DEREN HERSTELLUNG
TIGE DE PEDALIER POUR BICYCLETTES ET SON PROCEDE DE FABRICATION

(30) Priority: 13.01.2004 JP 2004005203
(43) Date of publication of application: 18.10.2006
(73) Proprietor: TORAY INDUSTRIES, INC., Tokyo 103-8666 (JP); SHIMANO INC., Sakai-ku Sakai-shi Osaka 590-8577 (JP)
(72) Inventor: MASUDA, Yasuhisa, Ehime 7913120 (JP); YOSHIOKA, Kenichi;, Ehime 791012 (JP); NONOSHITA, Tetsu, Osaka 5940042 (JP); KISHITA, Takuji, Shizuoka 4370036 (JP)
(74) Representative: Kador & Partner
(86) International application number: PCT/JP2005/000096
(87) International publication number: WO 2005/068284

(56) References cited:
- EP-A1- 1 270 393
- JP-A- 1 205 091
- JP-A- 6 321 167
- JP-A- 7 001 607
- JP-A- 7 144 371
- JP-A- 8 295 977
- JP-A- 2003 072 666
- US-A1- 2 350 468
- US-A1- 4 811 626
- US-A1- 2003 051 573

## Description

### Technical Field of the Invention

The present invention relates to a crank for a bicycle and a method of producing the same, and specifically, to a crank for a bicycle having an outer shell made of a fiber-reinforced plastic and a method of producing the same.

### Background Art of the Invention

As well known, a crank for a bicycle is a member for connecting a pedal and a bracket spindle, and a power transmission member for transmitting a leg power from the pedal. As properties required for this crank, a fatigue resistance enough to prevent an injury and a deformation even if a load from a pedal is repeatedly applied, and a good feeling and a rigidity enough to avoid a contact with a frame or a chain by s deformation of the crank when a pedal is trodden, are required. Further, it is desired to be light in weight as much as possible, because the crank itself rotates in addition to the whole of the bicycle body is required to be light in weight. Such requirements are severe particularly in a bicycle for a match such as a so-called road racer.

For these requirements, mainly an aluminum alloy has been used as a conventional material for the crank. Concretely, a high-strength alloy such as 7075 alloy is used, and further, for lightening in weight, a crank having a hollow structure is also on the market. However, use of an aluminum alloy is limited for lightening in weight, and it becomes necessary to substitute the material for the requirement of lightening in weight.

From such a viewpoint, a fiber-reinforced plastic is paid attention to as a light, high-strength and high-rigidity material, application thereof to a crank is investigated, and there are some cases thereof on the market. However, even if a fiber-reinforced plastic is used, frequently it has been difficult to satisfy all of the above-described requirements, or even if possible, a process for producing the crank has become complicated and a cost up has been caused. Namely, in a conventional crank formed from a fiber-reinforced plastic, it has been difficult to provide it, which satisfies all of fatigue resistance, rigidity and lightening in weight, at a low cost.

For this problem, a structure is proposed wherein an outer shell of a crank is made of a fiber-reinforced plastic and the inside is made of a light core or as a hollow structure. For example, in patent document 1, a crank for a bicycle is disclosed wherein an outside of an insert and a core made of a foam material is covered with an outer shell made of a fiber-reinforced plastic. In this patent document 1, a method is employed wherein a core is formed by injecting a foam material into an outer shell of a fiber-reinforced plastic which partially opens. In this method, however, there are many works in a mold, it is difficult to increase the molding efficiency, and a cost up is caused. Further, although the fiber-reinforced plastic for the outer shell is molded by being pressed to an outer mold by a pressure of the foam material, this pressure is lower than a pressure applied in a usual molding such as press molding or autoclave molding, a defect such as voids or a waving of fibers is liable to occur, and the strength and rigidity of the crank is likely to decrease. Moreover, an opening portion for injecting the foam material may become a defect. Furthermore, because a foam material capable of applying a pressure is generally high in specific gravity, there is a limitation to make the crank light in weight.

Further, also in patent document 2, a crank for a bicycle is disclosed wherein a portion around an insert and a core is covered with an outer shell made of a fiber-reinforced plastic. In this patent document 2, a method of molding by winding a tape of reinforcing fibers, mixed in a plastic matrix material, around the core and the insert is employed, and in this method, there is a defect that it is difficult to avoid snaking of fibers or occurrence of voids. Further, in order to obtain a hollow crank, it is necessary to introduce a process for taking out the core after molding, and it is unadvantageous for making the crank easily.

Thus, it has been difficult in a conventional fiber-reinforced plastic crank to realize a lightness in weight, a high strength, a high rigidity and a low cost by making an outer shell with a fiber-reinforced plastic with less fiber waving and voids, and forming the inside thereof as a hollow structure or with a very light foam material.
Patent document 1: U.S. Patent 6,202,506
Patent document 2: JP-A-2003-72666

US 4811626 A1 describes a crank for a bicycle according to the preamble of claim 1.

### Disclosure of the Invention

### Problems to be solved by the Invention

Accordingly, an object of the present invention is to solve the above-described problems and to provide a crank for a bicycle with a good production efficiency, capable of obtaining a desirable quality stably, and light in weight, and a method of producing the same.

### Means for solving the Problems

To achieve the above object, a crank for a bicycle is provided as defined by the features of claim 1.

A crank for a bicycle connects a pedal and a bracket spindle of the bicycle, and although it is usually provided as a formation of a pair in a left side and a right side, the crank according to the present invention may be applied to any of left and right sides, and, of course, may be applied to both sides.

The crank for a bicycle according to the present invention has an outer shell made of a fiber-reinforced plastic. As the reinforcing fibers thereof, although carbon fibers, glass fibers, aramide fibers, boron fibers, etc. can be employed, carbon fibers are preferable from the viewpoint of being excellent in mechanical properties. There are pitch-system or PAN-system carbon fibers and graphite fibers in carbon fibers, and among these, PAN-system carbon fibers are preferable which are excellent in strength and elastic modulus. From the balance between rigidity and strength of a crank, the tensile elastic modulus of carbon fibers is preferably in a range of 200 GPa to 700 GPa, more preferably in a range of 200 GPa to 500 GPa, and particularly preferably in a range of 250 GPa to 350 GPa. As the formation, a unidirectionally arranged formation of continuous fibers, a formation of a woven fabric, a formation dispersed with discontinuous fibers, etc. can be used. As the matrix resin, although a thermosetting resin such as an epoxy resin, a phenolic resin or unsaturated polyester resin and a thermoplastic resin such as a polyamide resin or a polycarbonate resin can be employed, among these, an epoxy resin, which is excellent in mechanical properties and high in adhesive property with carbon fibers, can be suitably used.

Further, it is preferred that 50% or more of reinforcing fibers forming the above-described at least two fiber-reinforced plastic members are in a range of 290 to 700 GPa in elastic modulus and in a range of 40 to 70% in fiber volume content (Vf). Such a crank for a bicycle designed at a high elastic modulus is light in weight and highly rigid, and it becomes a crank which is not fatigued even if used for a long time. Further, if the formation of 50% or more of reinforcing fibers forming the fiber-reinforced plastic members is a unidirectionally arranged formation of continuous fibers or a woven fabric, the resistance against impact causing pierce is increased even if a hollow structure is employed, and such a condition is preferable.

The crank for a bicycle according to the present invention is a shell-like member substantially forming an outer surface of the crank, and shares much load because fibers with a high elastic modulus are used. Therefore, as the properties of the crank, little waving of reinforcing fibers and little voids are required. In order to suppress the waving of reinforcing fibers, it is preferred to provide a flat surface formed by being pressed with molds from both the inner and outer surfaces of the outer shell by press molding and the like, namely, it is preferred that the inner surface of the outer shell, which is not required to be flat on appearance, is also formed to be flat. In the present invention, it is preferred that, in one direction at least at one position among the inner surface of the outer shell, a center line average roughness Ra, determined at a measurement length of 7.5 mm and a cut off of 2.5 mm according to JIS-B0601-1982, is 100µm or less, preferably 20µm or less.

The thickness of the outer shell is preferably in a range of 0.1 mm to 4.0 mm. If the thickness of the outer shell is less than this range, molding becomes difficult, and on the contrary, if more than this range, the weight increases and the advantage for lightening in weight according to the present invention decreases. It is possible to provide a rib, a projection or an unevenness to the inner surface of the outer shell in order to increase its strength and rigidity, and it is also possible to form a structure with a desired property by combination with a metal or other materials.

The whole of the above-described outer shell is not molded integrally, and it is integrated by bonding or mechanically connecting a plurality of (at least two) fiber-reinforced plastic members to each other. By this, each member to be molded becomes simple in shape, and it can be formed as a member having less voids and fiber waving. Although the number of members is an arbitrary number of two or more and it is different depending on the shape of the crank, a structure of two members, which substantially form an upper surface of the crank (positioned at a side apart from a body of a bicycle) and a lower surface thereof (positioned at a side close to the body of the bicycle), is most preferable.

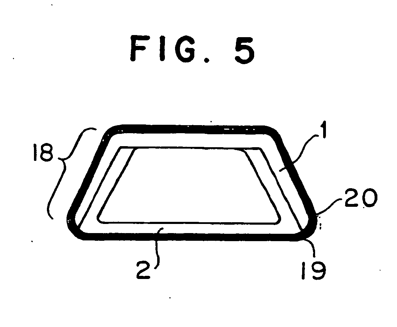

Further, the fiber-reinforced plastic members are overlapped with each other (for example, shown in Fig. 5 as described later). By being overlapped with each other, the rigidity can be set great, and an allowable dimensional accuracy of the members can be absorbed. Namely, if a structure is employed wherein the fiber-reinforced plastic members are abutted to each other, a gap may be generated at an abutted portion, water may enter through the gap and it may cause a decrease of durability, or the members may interfere with each other and it may become impossible to assemble a predetermined structure and a process for additionally processing a member may be required. However, by employing the overlap structure, it becomes possible to solve such problems. Further, it is preferred to connect both members to each other at the overlapped portion by bonding or mechanical connection. By bonding the members at the whole or a part of the overlapped portion by an adhesive, the rigidity is increased more than that at a simple overlap condition, and a more highly reliable and light crank structure can be realized. In a case of mechanical connection, the members may be fixed to each other with bolts, screws, fasteners, etc., by employing a structure wherein holes are provided to the overlapped portion, and the like. In such a case of mechanical connection, because it is possible to disassemble the members, repair thereof is facilitated. To employ the mechanical connection and bonding together is also one of preferable embodiments for the member of a crank to which high durability and reliability are required.

Further, a connection line formed by the overlapped portion of the members (a boundary line, in particular, a connection line appeared outside) extends in a longitudinal direction of the crank. This is because, although a force stretching a crank is applied to a pedal portion of the crank by a weight of a rider, if the overlapped portion of the members is perpendicular to the longitudinal direction of the crank, it is necessary to make an area of the overlapped portion extremely large and it causes a heavy weight. As described above, if the members are two members substantially forming an upper surface of the crank (positioned at a side apart from a body of a bicycle) and a lower surface thereof (positioned at a side close to the body of the bicycle), in addition to be light in weight, a large area for adhesion can be obtained at the overlapped portion of both members, and therefore, a bonding with a high reliability becomes possible. Besides, a force can be transmitted from both of the upper surface member and the lower surface member directly to a bracket spindle even for the force stretching the crank applied to the crank, and the crank can have a high reliability. Further, in this structure, because the connection portion does not exist on a design surface (a surface observed from a side of a bicycle), it is most preferable also on appearance.

Further, in the crank for a bicycle according to the present invention, a fiber-reinforced plastic layer is further disposed additionally on the outside of the outer shell. By extending the reinforcing fibers of this layer continuously around the crank, the above-mentioned connection portion of the outer shell is covered, and the durability of the crank can be further increased. Namely, it is a structure wherein at least a part of the outer shell is covered with the fiber-reinforced plastic layer. More concretely, for example, it is a structure wherein the above-described at least two fiber-reinforced plastic members are connected to each other so that a connection line thereof appeared outside extends in a longitudinal direction of the crank, and at least a part of the connection line is covered with a fiber-reinforced plastic layer. In this case, it is preferred that 50 to 100% of the entire length of the connection line is covered with the fiber-reinforced plastic layer.

As a concrete method for forming the above-described additional fiber-reinforced plastic layer, for example, a method can be employed wherein a tape-like substrate (such as a towpreg) or a sheet-like substrate (such as a prepreg), which comprises an uncured resin and reinforcing fibers, is wound outside the outer shell, and the resin is cured in an oven, a press, a mold or an autoclave. Although the winding may be carried out relatively to either the whole of the outer shell or a part thereof, it is preferred to increase an amount of winding for a portion important on strength. Preferably, if a half (50%) or more of the entire length of the connection line is covered with the layer as described above, the durability increases remarkably. If less than a half, there is a possibility that the reinforcing effect due to the additional fiber-reinforced plastic does not exhibit enough.

Where, it is preferred that the thickness of the preferable additional fiber-reinforced plastic layer is smaller than that of each of the two fiber-reinforced plastic members forming the connection line, and that 50% or more of the surface formed by the two fiber-reinforced plastic members is covered. If the thickness of the additional fiber-reinforced plastic layer is greater than that of the two fiber-reinforced plastic members forming the connection line, when the layer is formed, the fiber-reinforced plastic member may be deformed and the shape and dimension thereof may not be finished at predetermined conditions, and ultimately, the durability of the crank may be reduced. The thickness of the additional fiber-reinforced plastic layer is preferably in a range of about 0.1 mm to about 2 mm. Further, it is preferred that the additional fiber-reinforced plastic layer covers a half (50%) or more of the surface formed by the two fiber-reinforced plastic members.

Further, it is preferred that 30% or more of reinforcing fibers of the additional fiber-reinforced plastic layer are oriented at an angle of 45 to 135 degrees relative to the connection line appeared outside (here, it is defined that a direction of a connection line appeared outside is a zero degree direction, and the angle is determined in a clockwise direction). By this, the additional fiber-reinforced plastic layer can suppress opening of the connected portion more effectively, and the durability of the crank can be increased more efficiently. An orientation for suppressing displacement due to the opening most effectively is 90 degrees. Where, it is possible to give an effect for increasing the torsion rigidity and the flexural rigidity together with the effect for suppressing displacement due to the opening. Adjustment is preferable for increasing the amount of fibers oriented in 45 degree direction in order to increase the torsion rigidity, and the amount of fibers oriented in a direction close to 0 degree direction in order to increase the flexural rigidity.

It is possible to form the additional fiber-reinforced plastic layer by autoclave, metal mold pressing, rubber molding, etc. Because the additional fiber-reinforced plastic layer becomes almost a final appearance of the crank, it is preferred to wind it at a condition where a tension is applied so that a wrinkle or irregularity does not occur. In particular, in order to make irregularity less, it is preferred to form the layer by rubber molding at a condition applied with a pressure of 0.1 to 0.5MPa. Further, because the fiber-reinforced plastic layer forms an outermost layer and forms a design surface, the reinforcing fibers forming this fiber-reinforced plastic layer are preferably to be formed as a formation of a woven fabric, in order to give a good design property. For a portion complicated in shape such as a curved portion, it is also preferred to use a tape prepreg from the viewpoint of workability.

In a case where the fiber-reinforced plastic members adhered to each other, from the viewpoint of enlarging the adhesion area, the two members to be adhered to each other are overlapped preferably at a width of 5 mm or more, more preferably at a width of 15 mm or more. Further, in order to strengthen the adhesion, if a structure is employed wherein a compression stress can be applied, when a force operates in a direction separating the members after adhesion, by devising the angle of the adhesive surface and the like, the strength of the crank becomes higher, and such a structure is particularly preferable. As the adhesive, any of heat curing type and room-temperature curing type may be employed, and although it can be appropriately selected from various adhesives such as an epoxy group and an urethane group, a room-temperature curing epoxy-group adhesive is particularly preferred from the viewpoint of workability, durability of adhesive, etc.

Further, it is preferred that a Barcol hardness of the adhesive is smaller than that of a matrix resin forming the fiber-reinforced plastic members. This is because, in the process for production, when the adhesive gets out and the cured adhesive adhered to the fiber-reinforced plastic member is removed, if the hardness of the adhesive is high, there is a possibility that the fiber-reinforced plastic member is also cut.

The crank for a bicycle according to the present invention can be easily formed as a hollow structure by making the outer shell by bonding premolded members to each other. By employing the hollow structure, lightening in weight of the crank can be facilitated.

The crank for a bicycle according to the present invention has at least two insert members in the outer shell. A first insert member has a structure capable of being connected to a pedal shaft, for example, has a through hole with a thread and the like. On the other hand, a second insert member has a structure capable of being connected to a bracket spindle, for example, has a through hole with a ratchet groove and the like. To the second insert member, it is preferred that another structure for effectively transmitting a toque to a sprocket, for example, a structure having through holes and the like capable of achieving bolt connection relative to respective tip portions of four to five arm-like extending portions, is added. Further, the through holes may be formed relative to a structure integrated with an outer shell forming member (1 or 2 described later). It is preferred that these two insert members are disposed at both end portions of the crank, respectively. If a structure is employed wherein force transmission therebetween is carried out mainly by the outer shell, lightening in weight can be achieved by making the inside at a hollow structure or with a very light foam material. Where, it is also possible to connect therebetween by a wire material and the like, from a reason on production, for example, for the purpose of positioning the insert members to each other.

In the crank for a bicycle according to the present invention, introduction of a leg power from a pedal and transmission of a torque to a bracket spindle or a sprocket are carried out mainly via insert members. In a case where a through hole for attaching a gear is formed integrally with an outer shell forming member, a torque is transmitted from an insert member to the through hole. On the other hand, a power transmission between insert members is performed mainly by an outer shell. Therefore, a power transmission between an insert member and an outer shell is very important on the strength and the rigidity of the crank. Therefore, the adhesion area between the insert member and the outer shell is preferred to be large as much as possible, and it is preferred that 50% or more of the area of the outer surface of the insert member is adhered to the outer shell. Further, in order to increase the strength of this adhesion, it is preferred that a film-like adhesive layer is disposed on the adhesive surface. Further, it is very preferred that the respective insert members are adhered directly to all of a plurality of fiber-reinforced plastic members forming the outer shell, because the burden of the bonded portion between the fiber-reinforced plastic members can be reduced and the durability and rigidity of the crank can be increased remarkably. Further, improvement of bonding property and lightening in weight may be performed by providing a through hole, a hollow portion or an opening to the insert members.

Although various materials can be used as the material for the insert members, it is preferred to be selected from various metals, resins or fiber-reinforced plastics, or a combination thereof. Among these materials, an aluminum alloy or a composite of an aluminum alloy and a carbon fiber-reinforced plastic is particularly preferable.

In particular, a heat treated aluminum alloy with a fatigue strength of 10 kgf/mm² or more, preferably 15 kgf/mm² or more, is preferred. Because, since a rigidity radically changes at a boundary portion in a hybrid structure of different materials of a fiber-reinforced plastic and an aluminum, a great stress operates locally, and there is a possibility that a fatigue failure occurs in the aluminum. Although the fiber-reinforced plastic has a high fatigue strength, by providing a corresponding high fatigue strength to the insert members, the durability of the crank can be increased. Moreover, by being heat treated, a change in properties on time is small, and the durability of the crank used outdoor can be increased.

Further, it is preferred on durability that an oxide skin having a thickness of 3 to 30µm is formed on the aluminum alloy by, for example, anodizing. In particular, in a combination with a carbon fiber-reinforced plastic, there is a fear of electric corrosion, and it becomes possible to suppress the electric corrosion by forming the oxide skin with a thickness of 3 to 30µm. Forming of the oxide skin is possible by sulphate alumite treatment or phosphate alumite treatment. Among these, the phosphate alumite treatment is most preferable because a strong oxide skin can be formed.

Although the inside of the outer shell is formed preferably as a hollow structure or with a light foam material, the hollow structure is particularly preferred from the viewpoint of making the crank light in weight.

A method of producing a crank for a bicycle according to the present invention comprises the steps as defined in claim 16.

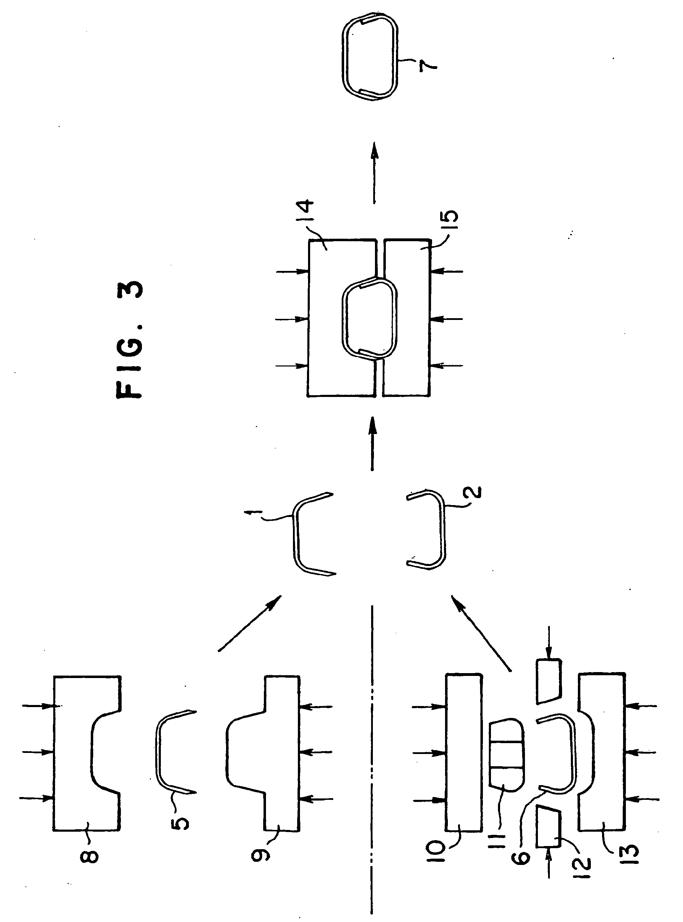

Namely, for production of the crank for a bicycle according to the present invention, for example, as details are shown in a concept diagram depicted as Fig. 3 described later, a plurality of members formed from a fiber-reinforced plastic member are molded in advance by press molding or in an autoclave using a single-faced mold or a double-faced mold, and thereafter, an outer shell is formed by integrating those members. It is preferred that in this integration step insert members are disposed in the outer shell and they are simultaneously integrated by adhesion and the like.

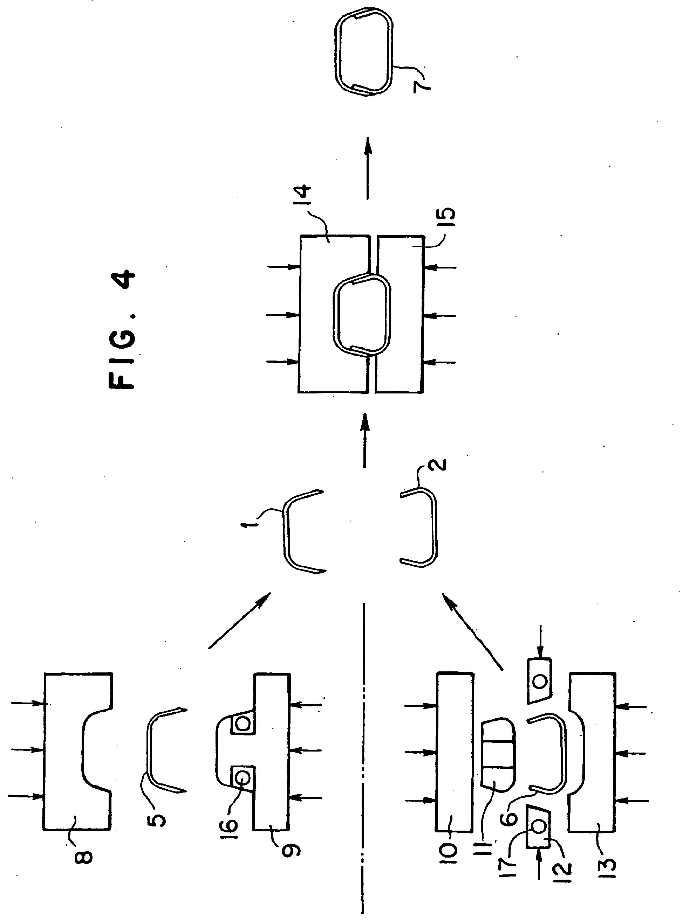

Further, a method can be also employed wherein, when the crank for a bicycle according to the present invention is produced, as shown in Fig. 4 described later, by devising a shape of a mold for forming the outer shell, a part thereof is left at a condition of being not molded, for example, by means for cooling the part, and the bonding is achieved together with molding of the part at the time of assembling.

### Effect according to the Invention

In the crank for a bicycle and the method of producing the same according to the present invention, a crank for a bicycle with a desirable quality and light in weight can be obtained stably at a good production efficiency.

### Brief explanation of the drawings

[Fig. 1] Fig. 1 is an exploded perspective view, showing elements forming a crank for a bicycle according to an embodiment of the present invention.
[Fig. 2] Fig. 2 is a partially cut away, perspective view of a crank for a bicycle according to an embodiment of the present invention.
[Fig. 3] Fig. 3 is a schematic flow diagram, showing a method of producing a crank for a bicycle according to an embodiment of the present invention.
[Fig. 4] Fig. 4 is a schematic flow diagram, showing a method of producing a crank for a bicycle according to another embodiment of the present invention.
[Fig. 5] Fig. 5 is a cross-sectional view, showing elements forming a crank for a bicycle according to another embodiment of the present invention, and showing a portion corresponding to a portion in Fig. 2 as viewed along line X-X' of Fig. 2.
[Fig. 6] Fig. 6 is a schematic flow diagram, showing a method for forming the elements of Fig. 5.

### Explanation of symbols

1, 2: outer shell forming member
3, 4: insert member
5, 6: outer shell forming member
7: crank
8, 9, 10, 11, 12, 13: mold for molding outer shell
14, 15: mold for assembling
16, 17: a device for not molding a part of outer shell
18: portion overlapped with outer shell forming members
19: connection line appeared outside
20: fiber-reinforced plastic layer
21: substrate for forming fiber-reinforced plastic layer

### The Best mode for carrying out the Invention

Hereinafter, desirable embodiments of the present invention will be explained referring to figures.

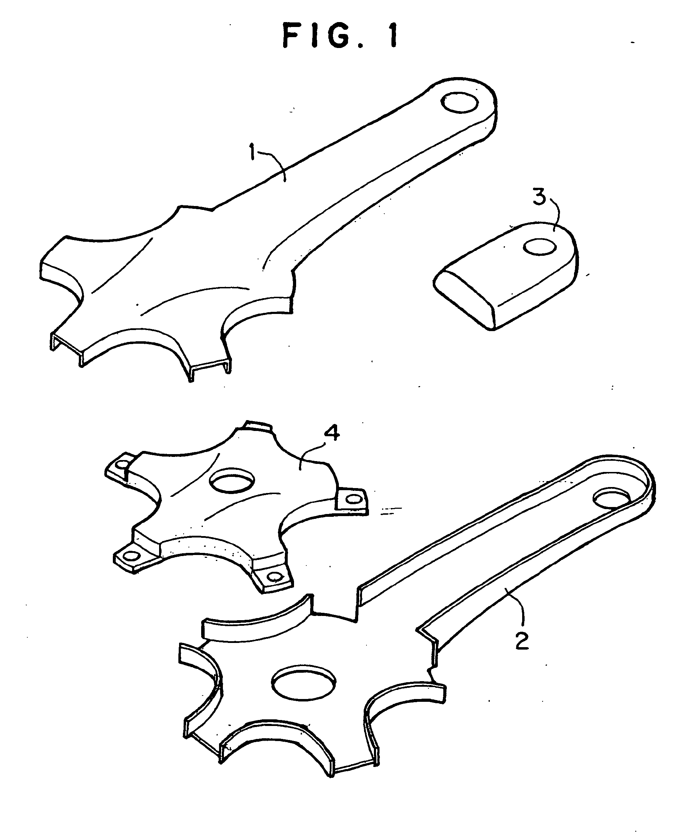

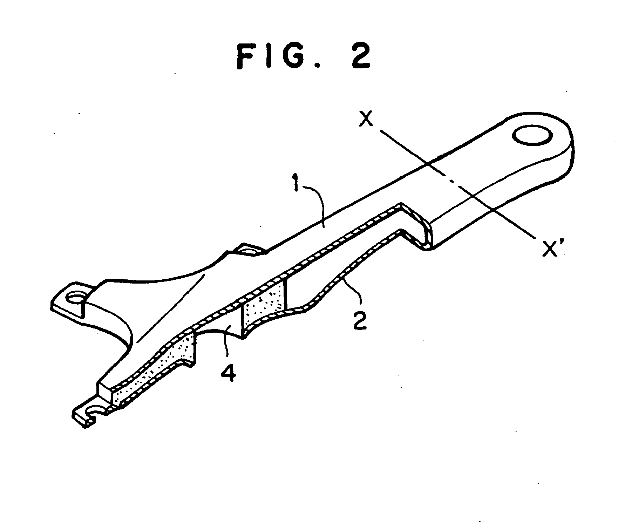

Fig. 1 is a perspective view, showing elements forming a crank for a bicycle according to an embodiment of the present invention at an exploded state. Fig. 2 is a partially cut away, perspective view of a crank for a bicycle according to an embodiment of the present invention, showing a state where the respective elements are assembled as a crank.

In Fig. 1, symbols 1 and 2 indicate fiber-reinforced plastic members which form an outer shell, and they can be formed in a shape of a crank by being assembled. Symbol 3 shows an insert member connected to a pedal shaft, and symbol 4 shows an insert member connected to a bracket spindle, respectively, and these insert members 3 and 4 are disposed in the outer shell. Assembling of these outer shell forming members 1, 2 and insert members 3, 4 is carried out by adhesion or mechanical connection.

Preferably, these insert members 3, 4 are made from a metal, a resin, a fiber-reinforced plastic, or a combination thereof. More preferably, the insert members are formed by a combination of an aluminum alloy and a carbon fiber-reinforced plastic.

Next, a method of producing a crank for a bicycle according to an embodiment of the present invention will be explained referring to Figs. 3 and 4.
Fig. 3 is a concept diagram, showing an example of a method of producing a crank for a bicycle according to the present invention, and a schematic diagram as viewed from a sectional direction from a step of molding to a step of assembling. Fig. 4 is a concept diagram of a production method further devised. In Fig. 3, symbol 8 shows a negative mold for molding outer shell forming member 1, and symbol 9 shows a positive mold with a shape for forming a cavity necessary to mold outer shell forming member 1 by facing mold 8. Symbol 5 shows a substrate of reinforcing fibers or a prepreg for molding outer shell forming member 1. Using molds 8 and 9, the outer shell forming member 1 can be obtained by pressing and heating the substrate 5.

Symbol 10 shows a mold for molding outer shell forming member 2, symbol 11 shows a core for molding for pressing the inner surface of outer shell forming member 2, symbol 13 shows a negative mold for molding outer shell forming member 2, and symbol 12 shows a mold for molding and pressing the wall surface of outer shell forming member 2. Further, symbol 6 shows a substrate due to reinforcing fibers or a prepreg for molding outer shell forming member 2. The outer shell forming member 2 can be obtained by pressing and heating substrate 6 by the structure of molds 10 to 13.

Symbol 14 shows a mold for assembling for assembling an outer shell member, and symbol 15 shows a mold for assembling having a shape for forming a cavity corresponding to an outer shape of crank 7 by being combined with mold for assembling 14. By placing outer shell forming members 1, 2 applied with an adhesive into molds for assembling 14, 15 and pressing them and, as needed, by heating them, the outer shell forming members are bonded to each other and crank 7 can be obtained.

Fig. 4 shows a production method wherein a part of outer shell forming members 1, 2 is not cured at the time of molding. Symbol 16 shows a device for cooling a part of mold 9. When outer shell forming member 1 is molded, by cooling a region corresponding to the adhesive portion of the outer shell so that a heat at the time of molding is not transmitted, outer shell forming member can be prepared while this cooled portion is left as the portion is not cured. Symbol 17 also shows a device for cooling a part of a mold. When outer shell forming member 2 is molded using this device 17, outer shell forming member 2 having a region corresponding to the adhesive portion which is uncured can be prepared.

By assembling outer shell forming members 1, 2 having uncured regions thus prepared and pressing and heating them by molds for assembling 14, 15, because the uncured portions are cured while being bonded to each other, substrates 5, 6 are connected to each other by using resins themselves contained in the substrates 5, 6 as an adhesive.

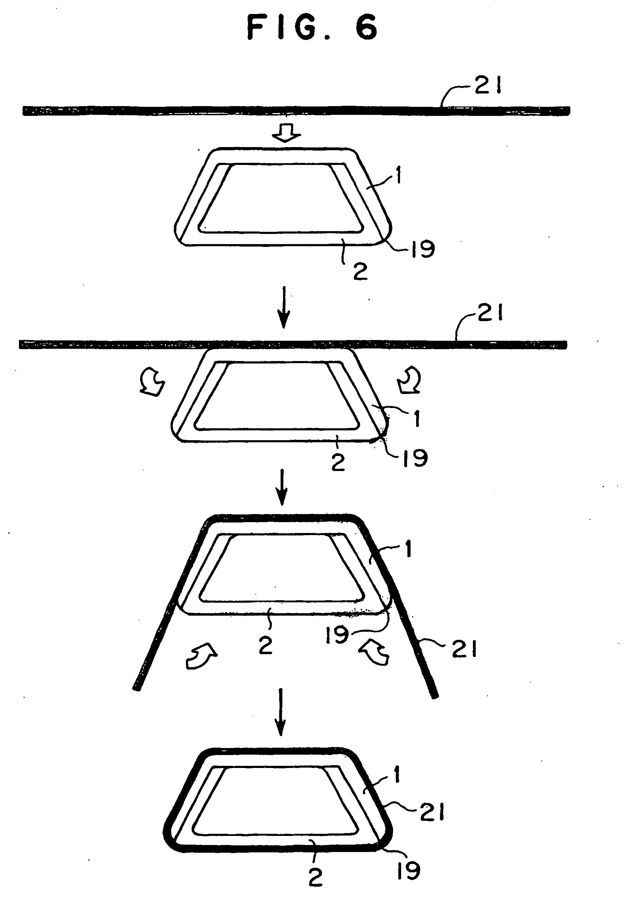

Fig. 5 is a cross-sectional view, showing elements forming a crank for a bicycle according to another embodiment of the present invention, and showing a portion corresponding to a portion in Fig. 2 as viewed along line X-X' of Fig. 2, and shows an example of a case where at least a part of the outer shell (in this embodiment, over the entire outer circumference of the outer shell) is covered with a fiber-reinforced plastic layer. Fig. 6 is a schematic flow diagram, showing a method for forming the elements of Fig. 5.

In Fig. 5, the entire outer circumference of the outer shell formed by outer shell forming members 1, 2 is covered with fiber-reinforced plastic layer 20. This fiber-reinforced plastic layer 20 is provided, in particular, so as to cover at least a part of a portion 18 where outer shell forming members 1, 2 are overlapped, particularly, at least a part of a connection line 19 which appears outside and extends in the longitudinal direction of the crank. Further, since this fiber-reinforced plastic layer 20 is provided additionally outside the outer shell, it forms an outermost surface of the crank and a good design property is required therefore, it is preferred that a woven fabric is used as the reinforcing fibers forming fiber-reinforced plastic layer 20.

In this embodiment, the above-described additional fiber-reinforced plastic layer 20 is formed by winding a substrate 21 forming the fiber-reinforced plastic layer 20, as shown in Fig. 6. Namely, the substrate 21 is wound in order at a predetermined winding length onto the outer shell formed by outer shell forming members 1, 2, and formed is the additional fiber-reinforced plastic layer 20 which covers the outer shell, particularly, connection line 19. Thereafter, the additional layer is cured.

### Examples

Prepreg A (resin weight content: 30%) prepared by impregnating an epoxy resin into a cloth formed by carbon fibers with an elastic modulus of 230 GPa (CO6343 produced by Toray Industries, Inc.), prepreg B (resin weight content: 30%) prepared by impregnating an epoxy resin into a cloth formed by carbon fibers with an elastic modulus of 280 GPa (CO6142 produced by Toray Industries, Inc.), and prepreg C prepared by arranging carbon fibers unidirectionally and impregnating an epoxy resin thereinto (P2053-20 produced by Toray Industries, Inc., fiber weight: 200 g/m², resin weight content: 30%), were used. For measurement, a right crank with a crank length of 170 mm was used.

### Example 1:

Outer shell members were formed by stacking one layer of prepreg A and six layers of prepreg C as a member forming a surface-side shape of a crank, stacking one layer of prepreg A and 16 layers of prepreg C as a member forming a back surface-side shape of the crank, placing the respective members in a mold, and press molding them at 130°C for one hour. The surface roughness Ra of the inner surface of this outer shell was 2.8µm.

Insert members were made by cutting materials so that their shapes correspond to the shapes of two portions of a pedal shaft side and a bracket spindle side, respectively. Among these members, the bracket spindle-side insert member was formed as an insert member formed by integrating a carbon fiber-reinforced plastic portion onto a main structure made from an aluminum alloy.

After the adhesive surfaces of these two outer shell members and the insert members (2024AL) were sanded to form rough surfaces, a room temperature curing-type high-toughness epoxy adhesive (TE2220 produced by Toray Industries, Inc.) was applied thereto and the members were assembled to integrate them, and then, the assembly was left at a room temperature for 12 hours and cured. Thereafter, flash around the assembly was removed by machining, and a crank for a bicycle having a structure as shown in Fig. 1 was obtained.

### Example 2:

Outer shell members were formed by stacking ten layers of prepreg C as a member forming a surface-side shape of a crank, stacking 8 layers of prepreg C as a member forming a back surface-side shape of the crank, placing the respective members in a mold, and press molding them at 130°C for one hour. The surface roughness Ra of the inner surface of this outer shell was 2.7µm. Insert members were made in a manner similar to that of Example 1.

After the adhesive surfaces of these outer shell members and the insert members were sanded to form rough surfaces, the epoxy adhesive (TE2220 produced by Toray Industries, Inc.) was applied thereto and the assembly was left at a room temperature for 12 hours and cured. Thereafter, flash around the assembly was removed by machining, three layers of prepreg B were wound so as to enclose the crank from the surface side of the crank, they were enclosed with a nylon film, after the inside of the enclosure was reduced in pressure, the assembly was molded and cured at 130°C in a furnace by bag molding, and a crank for a bicycle having a structure as shown in Fig. 2 was obtained.

In Examples 1 and 2, the cranks obtained were compared with a conventional crank by a test shown in Japanese Industrial Standard JIS "Gear crank for a bicycle" D9415, and it was confirmed that both of them had a sufficient strength.

### Industrial Applications of the Invention

Although the present invention relates to a crank for a bicycle, it is not limited thereto, it can be applied to, for example, a complicated hollow structure such as a bicycle frame or a suspension arm.

## Claims

1. A crank for a bicycle comprising an outer shell made of a fiber-reinforced plastic, a first insert member (3) configured and arranged to introduce a load from a pedal shaft, and a second insert member (4) coupled to a bracket spindle and configured and arranged to transmit a load to a sprocket, said outer shell comprising at least two fiber-reinforced plastic members (1, 2) at least a part of each of which is molded in advance and which fiber-reinforced plastic members (1, 2) are connected to each other so that a connection line thereof appeared outside extends in a longitudinal direction of said crank,
**characterized in that**
said fiber-reinforced plastic members (1, 2) are overlapped with each other and at least a part of said connection line is covered with a fiber-reinforced plastic layer (20).

2. The crank for a bicycle according to claim 1, wherein said outer shell is formed by bonding said at least two fiber-reinforced plastic members (1,2) to each other.

3. The crank for a bicycle according to claim 1, wherein said outer spell is formed by mechanically connecting said at least two fiber-reinforced plastic members (1,2) to each other.

4. The crank for a bicycle according to any of claims 1 to 3, wherein 50% or more of reinforcing fibers forming said at least two fiber-reinforced plastic members (1,2) are in a range of 290 to 700 GPa in elastic modulus and in a range of 40 to 70% in fiber volume content (Vf).

5. The crank for a bicycle according to any of claims 1 to 4, wherein a formation of reinforcing fibers forming said at least two fiber-reinforced plastic members (1,2) is a unidirectionally arranged formation of continuous fibers or a woven fabric.

6. The crank for a bicycle according to claim 1, wherein 50 to 100% of the entire length of said connection line is covered with a fiber-reinforced plastic layer (20).

7. The crank for a bicycle according to ctaim 1 or 6, wherein the thickness of said fiber-reinforced plastic layer (20) on said connection line is less than the thickness of each of said at least two fiber-reinforced plastic members (1, 2).

8. The crank for a bicycle according to any of claims 1, 6 or 7, wherein 30% or more of reinforcing fibers of said fiber-reinforced plastic layer (20) on said connection line are oriented at an angle of 45 to 135 degrees relative to said connection line.

9. The crank for a bicycle according to any of claims 1,6,7 or 8, wherein a formation of reinforcing fibers forming said fiber-reinforced plastic layer (20) is a woven fabric.

10. The crank for a bicycle according to any of claims 1 to 9, wherein at least one of said insert members (3,4) is formed from a metal, a resin, a fiber-reinforced plastic or a combination thereof.

11. The crank for a bicycle according to claim 10, wherein at least one of said insert members (3,4) is formed from a combination of an aluminum alloy and a fiber-reinforced plastic.

12. The crank for a bicycle according to claim 10, wherein at least one of said insert members (3,4) is formed from a heat treated aluminum alloy having a fatigue strength of 10 kgf/mm² or more.

13. The crank for a bicycle according to claim 10, wherein at least one of said insert members (3,4) is formed from an aluminum alloy formed with an oxide skin having a thickness of 3 to 30µm.

14. The crank for a bicycle according to any of claims 1 to 13, wherein at least one of said insert members (3,4) is bonded directly to all of said fiber-reinforced plastic members.

15. The crank for a bicycle according to any of claims 2, 4 to 14, wherein a Barcol hardness of an adhesive used for said bonding is smaller than that of a matrix resin forming said fiber-reinforced plastic members (1,2).

16. A method for producing a crank for a bicycle comprising the steps of:
premolding a plurality of fiber-reinforced plastic members (5, 6) using a single-faced mold or a double-faced mold;
integrating said plurality of fiber-reinforced plastic members (1, 2) premolded so that the fiber-reinforced plastic members are partly overlapped with each other and so that a connection line thereof appeared outside extends in a longitudinal direction of said crank; and
covering said plurality of fiber-reinforced plastic members (1, 2) with a fiber-reinforced plastic layer (20) so that at least a part of said connection line is covered with the fiber-reinforced plastic layer (20).

17. The method of producing a crank for a bicycle according to claim 16, wherein said plurality of fiber-reinforced plastic members (1,2) molded in said premolding step are integrated as an outer shell of a first insert member (3) configured and arranged to introduce a load from a pedal shaft and a second insert member (4) coupled to a bracket spindle and configured and arranged to transmit a load to a sprocket.

## Patentansprüche

1. Kurbel für ein Fahrrad, umfassend einen Außenmantel aus einem faserverstärkten Kunststoff, ein erstes Einschubteil (3), das so gestaltet und angeordnet ist, daß eine Belastung von einem Pedalschaft eingebracht wird, und ein zweites Einschubteil (4), das mit einer Stützwelle gekoppelt ist und so gestaltet und angeordnet ist, daß eine Belastung auf ein Zahnrad übertragen wird, wobei der Außenmantel zumindest zwei faserverstärkte Kunststoffteile (1, 2) umfaßt, von denen zumindest ein Teil vorher geformt worden ist, und wobei die faserverstärkten Kunststoffteile (1, 2) miteinander verbunden sind, so daß deren Verbindungslinie, die außen erscheint, sich in Längsrichtung der Kurbel erstreckt,
**dadurch gekennzeichnet, daß**
die faserverstärkten Kunststoffteile (1, 2) einander überlappen und zumindest ein Teil dieser Verbindunglinie mit einer faserverstärkten Kunststoffschicht (20) überzogen ist.

2. Kurbel für ein Fahrrad nach Anspruch 1, wobei der Außenmantel gebildet wird, indem die zumindest zwei faserverstärkten Kunststoffteile (1, 2) miteinander verbunden werden.

3. Kurbel für ein Fahrrad nach Anspruch 1, wobei der Außenmantel erzeugt wird, indem die zumindest zwei faserverstärkten Kunststoffteile (1, 2) mechanisch miteinander verbunden werden.

4. Kurbel für ein Fahrrad nach einem der Ansprüche 1 bis 3, wobei 50 % oder mehr der verstärkenden Fasern, die die zumindest zwei faserverstärkten Kunststoffteile (1, 2) bilden, einen Elastizitätsmodul im Bereich von 290 bis 700 GPa und einen Faservolumengehalt (Vf) im Bereich von 40 bis 70 % aufweisen.

5. Kurbel für ein Fahrrad nach einem der Ansprüche 1 bis 4, wobei die Anordnung der verstärkenden Fasern, die die zumindest zwei faserverstärkten Kunststoffteile (1, 2) bilden, eine in einer Richtung verlaufende Anordnung von kontinuierlichen Fasern oder ein gewebtes Textilerzeugnis ist.

6. Kurbel für ein Fahrrad nach Anspruch 1, wobei 50 bis 100 % der Gesamtlänge der Verbindungslinie mit einer Schicht (20) aus faserverstärktem Kunststoff bedeckt sind.

7. Kurbel für ein Fahrrad nach Anspruch 1 oder 6, wobei die Dicke der Schicht (20) aus faserverstärktem Kunststoff auf der Verbindungslinie geringer als die Dicke von jedem der zumindest zwei faserverstärkten Kunststoffteile (1, 2) ist.

8. Kurbel für ein Fahrrad nach einem der Ansprüche 1, 6 oder 7, wobei 30 % oder mehr der verstärkenden Fasern der Schicht (20) aus faserverstärktem Kunststoff auf der Verbindungslinie in einem Winkel von 45 bis 135° im Verhältnis zur Verbindungslinie orientiert sind.

9. Kurbel für ein Fahrrad nach einem der Ansprüche 1, 6, 7 oder 8, wobei die Anordnung der verstärkenden Fasern, die die Schicht (20) aus faserverstärktem Kunststoff bilden, ein gewebtes Textilerzeugnis ist.

10. Kurbel für ein Fahrrad nach einem der Ansprüche 1 bis 9, wobei zumindest eines der Einschubteile (3, 4) aus einem Metall, einem Harz, einem faserverstärktem Kunststoff oder einer Kombination davon erzeugt ist.

11. Kurbel für ein Fahrrad nach Anspruch 10, wobei zumindest eines der Einschubteile (3, 4) aus einer Kombination aus einer Aluminiumlegierung und einem faserverstärktem Kunststoff erzeugt ist.

12. Kurbel für ein Fahrrad nach Anspruch 10, wobei zumindest eines der Einschubteile (3, 4) aus einer wärmebehandelten Aluminiumlegierung mit einer Ermüdungsbeständigkeit von 10 kgf/mm² oder mehr erzeugt ist. 13.

13. Kurbel für ein Fahrrad nach Anspruch 10, wobei zumindest eines der Einschubteile (3, 4) aus einer Aluminiumlegierung erzeugt ist, die mit einer Oxidhaut mit einer Dicke von 3 bis 30 µm hergestellt ist.

14. Kurbel für ein Fahrrad nach einem der Ansprüche 1 bis 13, wobei zumindest eines der Einschubteile (3, 4) direkt mit all den faserverstärkten Kunststoffteilen verbunden ist.

15. Kurbel für ein Fahrrad nach einem der Ansprüche 2, 4 bis 14, wobei die Barcol-Härte eines Klebemittels, das für dieses Verbinden verwendet wird, geringer als die eines Matrixharzes ist, das die faserverstärkten Kunststoffteile (1, 2) bildet.

16. Verfahren zum Herstellen einer Kurbel für ein Fahrrad, umfassend die Schritte:
Vorformen mehrerer faserverstärkter Kunststoffteile (5, 6) unter Verwendung einer einseitigen Form oder einer doppelseitigen Form;
Integrieren der vorgeformten mehreren faserverstärkten Kunststoffteile (1, 2), so daß die faserverstärkten Kunststoffteile einander teilweise überlappen und daß deren Verbindungslinie, die außen erscheint, sich in Längsrichtung der Kurbel erstreckt; und
Überziehen der mehreren faserverstärkten Kunststoffteile (1, 2) mit einer Schicht (20) aus faserverstärktem Kunststoff, so daß zumindest ein Teil der Verbindungslinie mit der Schicht (20) aus faserverstärktem Kunststoff bedeckt ist.

17. Verfahren zum Herstellen einer Kurbel für ein Fahrrad nach Anspruch 16, wobei die mehreren faserverstärkten Kunststoffteile (1, 2) die im Vorformschritt geformt worden sind, als ein Außenmantel eines ersten Einschubteils (3), das so gestaltet und angeordnet ist, daß eine Belastung von einer Pedalwelle eingebracht wird, und ein zweites Einschubteil (4) integriert werden, das mit einer Stützwelle gekoppelt und so gestaltet und angeordnet ist, daß eine Belastung auf ein Zahnrad übertragen wird.

## Revendications

1. Tige de pédalier pour bicyclette comprenant une coquille externe en matière plastique renforcée par de la fibre, un premier élément d'insertion (3) configuré et disposé pour introduire une charge à partir d'une tige de pédale, et un deuxième élément d'insertion (4), couplé à un axe de braquet et configuré et disposé pour transmettre une charge à une dent de pignon, ladite coquille externe comprenant au moins deux éléments (1, 2) en matière plastique renforcée par de la fibre, dont au moins une partie est moulée à l'avance, et où ces éléments (1, 2) en matière plastique renforcée par de la fibre sont mutuellement raccordés pour qu'une ligne de raccordement les séparant apparaissant à l'extérieur s'étende dans une direction longitudinale de ladite tige de pédalier,
**caractérisée en ce que**
lesdits éléments (1, 2) en matière plastique renforcée par de la fibre se chevauchent et **en ce qu'**au moins une partie de ladite ligne de raccordement est recouverte d'une couche (20) de matière plastique renforcée par de la fibre.

2. Tige de pédalier pour bicyclette selon la revendication 1, dans laquelle ladite coquille externe est formée par collage mutuel desdits au moins deux éléments (1, 2) en matière plastique renforcée par de la fibre.

3. Tige de pédalier pour bicyclette selon la revendication 1, dans laquelle ladite coquille externe est formée par raccordement mécanique mutuel desdits au moins deux éléments (1, 2) en matière plastique renforcée par de la fibre.

4. Tige de pédalier pour bicyclette selon l'une quelconque des revendications 1 à 3, dans laquelle au moins 50 % des fibres de renfort formant lesdits au moins deux éléments (1, 2) en matière plastique renforcée par de la fibre sont dans une gamme comprise entre 290 et 700 GPa de module élastique et dans une gamme comprise entre 40 et 70 % de la teneur (Vf) en volume de fibres.

5. Tige de pédalier pour bicyclette selon l'une quelconque des revendications 1 à 4, dans laquelle une formation de fibres de renfort formant lesdits au moins deux éléments (1, 2) en matière plastique renforcée par de la fibre est une formation disposée de manière unidirectionnelle de fibres continues ou un tissu tissé.

6. Tige de pédalier pour bicyclette selon la revendication 1, dans laquelle 50 à 100 % de la longueur entière de ladite ligne de raccordement est recouverte d'une couche (20) de matière plastique renforcée par de la fibre.

7. Tige de pédalier pour bicyclette selon la revendication 1 à 6, dans laquelle l'épaisseur de ladite couche (20) de matière plastique renforcée par de la fibre est inférieure à l'épaisseur de chacune desdits au moins deux éléments (1, 2) en matière plastique renforcée par de la fibre sur ladite ligne de raccordement.

8. Tige de pédalier pour bicyclette selon l'une quelconque des revendications 1, 6 ou 7, dans laquelle au moins 30 % des fibres de renfort de ladite couche (20) de matière plastique renforcée par de la fibre sont orientées suivant un angle compris entre 45 et 135° par rapport à ladite ligne de raccordement sur ladite ligne de raccordement.

9. Tige de pédalier pour bicyclette selon l'une quelconque des revendications 1, 6, 7 ou 8, dans laquelle une formation de fibres de renfort formant ladite couche (20) de matière plastique renforcée par de la fibre est en tissu tissé.

10. Tige de pédalier pour bicyclette selon l'une quelconque des revendications 1 à 9, dans laquelle au moins un desdits éléments d'insertion (3, 4) est formé d'un métal, d'une résine, d'une matière plastique renforcée par de la fibre ou d'une combinaison de ces matériaux.

11. Tige de pédalier pour bicyclette selon la revendication 10, dans laquelle au moins un desdits éléments d'insertion (3, 4) est formé d'une combinaison d'un alliage d'aluminium et d'une matière plastique renforcée par de la fibre.

12. Tige de pédalier pour bicyclette selon la revendication 10, dans laquelle au moins un desdits éléments d'insertion (3, 4) est formé d'un alliage d'aluminium traité à chaud, dont la résistance à la fatigue est supérieure ou égale à 10 kgf/mm².

13. Tige de pédalier pour bicyclette selon la revendication 10, dans laquelle au moins un desdits éléments d'insertion (3, 4) est formé d'un alliage d'aluminium formé d'une peau d'oxyde dont l'épaisseur est comprise entre 3 et 30 µm.

14. Tige de pédalier pour bicyclette selon l'une quelconque des revendications 1 à 13, dans laquelle au moins un desdits éléments d'insertion (3, 4) est collé directement à l'ensemble desdits éléments de matière plastique renforcée par de la fibre.

15. Tige de pédalier pour bicyclette selon l'une quelconque des revendications 2, 4 à 14, dans laquelle une dureté Barcol d'un adhésif utilisé pour ledit collage est inférieure à celle d'une résine mère formant lesdits éléments (1, 2) de matière plastique renforcée par de la fibre.

16. Procédé de production d'une tige de pédalier pour bicyclette, comprenant les étapes suivantes :
moulage préalable d'un ensemble d'éléments (5, 6) de matière plastique renforcée par de la fibre utilisant un moule à face unique ou un moule à double face ;
intégration de ladite pluralité d'éléments (1, 2) de matière plastique renforcée par de la fibre prémoulés, afin que lesdits éléments de matière plastique renforcée par de la fibre soient en partie mutuellement recouverts, et afin qu'une ligne de raccordement entre eux apparaissant en dehors s'étende dans une direction longitudinale de ladite tige de pédalier ; et
recouvrement de ladite pluralité d'éléments (1, 2) de matière plastique renforcée par de la fibre avec une couche (20) de matière plastique renforcée par de la fibre, afin qu'au moins une partie de ladite ligne de raccordement soit recouverte par la couche (20) de matière plastique renforcée par de la fibre.

17. Procédé de production d'une tige de pédalier pour bicyclette selon la revendication 16, dans lequel ladite pluralité d'éléments (1, 2) de matière plastique renforcée par de la fibre moulés lors de ladite étape de moulage préalable est intégrée sous forme de coquille externe d'un premier élément (3) d'insertion, conçu et agencé pour appliquer une charge à partir d'un axe de pédale, et d'un deuxième élément d'insertion (4), couplé à une tige de braquet et conçu et agencé pour transmettre une charge à une dent.
